# EUROPEAN PATENT APPLICATION

(11) **EP 3 372 831 A1**
(43) Date of publication of application: **12.09.2018**
(21) Application number: 17160004.2
(22) Date of filing: 09.03.2017
(51) Int. Cl.: F03G 6/06, F02G 1/057, F24J 2/07

(54) **HYBRID SOLAR POWERED STIRLING ENGINE**

(71) Applicant: Ripasso Energy AB, 421 30 Västra Frölunda (SE)
(72) Inventor: MATTSON, Johan, 212 32 MALMÖ (SE); ANDERSSON, Alf, 238 43 OXIE (SE)
(74) Representative: AWA Sweden AB

(57) **Abstract**

A hybrid energy conversion system comprising a sun concentrator, a radiation chamber configured to receive high density sun radiation from the sun concentrator, and a Stirling engine operable to convert the high density sun radiation into mechanical energy. The system further comprises a burner arranged to use the radiation chamber as a combustion chamber for combustion of a suitable fuel for operation of the Stirling engine, and an enclosure forming an intermediate space between the enclosure and the chamber. A pressure in the intermediate space is kept higher than a pressure in the radiation chamber.

The flow of air through the intermediate space surrounding the radiation chamber will serve to remove any heat escaping from the radiation chamber. Thus, hot spots can be avoided, thereby reducing the risk for leakage caused by such hot spots.

## Description

### Field of the invention

The present invention relates to a hybrid energy conversion system using sun radiation as primary power source, and an alternative combustion fuel as secondary power source.

### Background of the invention

With the threat of global warming becoming more imminent, the interest in renewal energy sources has increased rapidly. One source of renewable power is the sun, and various techniques are available for extracting power from sun radiation. Two of the most widely spread sun power technologies are fluid carrying channel systems which are warmed by the sun, and solar panels where silicon based panels generate electricity when radiated by the sun.

Another technology, which has gained increase popularity in recent years, is to convert solar energy to mechanical energy in a Stirling engine. The mechanical energy can then be used to generate electricity.

Typically, a parabolic concentrator is used to collect and concentrate solar radiation, and the Stirling engine is arranged in the focal point of the concentrator. The concentrator may be provided with a mechanical support mechanism which automatically adjusts the position and orientation of the concentrator to face the sun. Such concentrators are referred to as "solar-tracking". Systems of this type are developed by Ripasso Energy AB in Sweden.

Obviously, a solar powered Stirling engine will be unable to deliver energy at times when sufficient solar power is not available, e.g. at night and during cloudy conditions. For this reason, it is desirable to combine the solar energy source with a secondary energy source which is independent of the sun. Such systems are referred to as hybrid systems. The secondary energy source is preferably a liquid or gas combustion fuel such as biogas.

An example of such a hybrid system is disclosed by CN 102877980. According to this solution, the Stirling engine is arranged separate from the solar energy concentrator and a combustion chamber, which are selectively used to power the Stirling engine. While this indeed provides a hybrid system, able to deliver electrical power also when there is no sun, the separation of the Stirling engine from the solar concentrator significantly reduces efficiency during solar operation.

In order to maintain high solar efficiency - which of course is a primary objective - it is preferable to have the Stirling engine arranged to receive solar energy directly from the concentrator, without any intermediary processing. In order to provide hybrid operation of such a system, the combustion will need to take place in the same place, i.e. essentially in the focal point of the concentrator.

Document KR 101454285 very schematically discloses an example of such a system. In this document, the solar chamber used to collect solar radiation to heat the heating unit of the Stirling engine is used also as a combustion chamber for a secondary fuel. The combustion chamber needs to be closed during combustion mode, either by a transparent window which allows solar radiation to pass, or by a movable cover. The cover is in an open state during solar mode, and in a closed state during combustion mode.

The solar chamber of a solar powered Stirling engine needs to withstand extreme temperatures. As there are no significant pressure gradients as long as the chamber is open, the chamber is typically made of a porous ceramic material with superior insulating and heat resistive properties.

A specific challenge when closing such a solar chamber and using it as a combustion chamber is that introduction of air required for the combustion introduces pressure gradients which may push hot gases out of the chamber leading to power loss and also potential damage to heat sensitive parts outside the chamber. For this reason, the chamber now also need to be sufficiently airtight. A simple approach would be to provide the ceramic chamber with an outer, air tight coating, e.g. a metal liner. However, tests show that such a chamber will develop local "hot spots", which with time may lead to small cracks that can develop to a rapid beakdown of hot gases expanding through the chamber walls. If a metal coating is instead placed on the inside, it would require some type of active cooling in order to withstand the extreme temperatures in solar mode. Yet another alternative would be to replace the porous ceramics with an air tight ceramics. However, this approach require delicate ceramic type seals between ceramic blocks constituting the chamber, and the high temperature gradients would also lead to mechanical stress and material degradation over time.

The prior art, such as KR 101454285, does not provide any solution to this problem.

### General disclosure of the invention

It is an object of the present invention to overcome, or at least mitigate, these problems with the prior art.

According to a first aspect of the present invention, this and other objects are achieved by a hybrid energy conversion system comprising a sun concentrator, a radiation chamber configured to receive high density sun radiation from the sun concentrator, the radiation chamber having chamber walls made of a heat resistant material, and a Stirling engine with a radiation-to-heat exchanger extending into the radiation chamber, so that the Stirling engine is operable to convert the high density sun radiation into mechanical energy. The system further comprises a burner arranged to use the radiation chamber as a combustion chamber for combustion of a suitable fuel for operation of the Stirling engine, an enclosure around the radiation chamber, in part separated from the chamber walls by an intermediate space, an enclosure inlet arranged to introduce cooling air into the intermediate space, and an enclosure outlet arranged to allow escape of pre-heated air from the intermediate space., A pressure in the intermediate space is kept higher than a pressure in the radiation/combustion chamber.

The flow of air through the intermediate space surrounding the radiation chamber will serve to remove any heat escaping from the radiation chamber. Thus, hot spots can be avoided, thereby reducing the risk for leakage caused by such hot spots.

Further, in the event any breach of the chamber wall does occur, the higher pressure in the intermediate space will cause a flow of air from the intermediate space into the radiation chamber at the point of such breach. Such air-flow will prevent heat from escaping through the breach. Put differently, instead of heat leaking *out from* the chamber, air will *leak into* the chamber. The pressurized intermediate space will thus adaptively react to and inhibit the effect of any breach of the chamber walls. A more critical deterioration of the chamber walls can thereby be prevented.

The invention thus provides a more efficient use of the radiation chamber as a combustion chamber. As a result, the hybrid energy conversion system can rely primarily on sun radiation as power source, but very efficiently switch to a burner mode where an alternative (fluid or gas) combustion fuel is used as power source. This may be appropriate when available sun radiation is insufficient, or for any other reason.

Typically, the radiation chamber will not be air-tight. The heat resistive material used for the chamber walls will typically be air permeable at least to a certain extent, and also there may be joints between separate wall partitions. For this reason, it may be advantageous to provide the at least portions of the outer surface of the chamber walls with an air-tight sealing. The cooling effect provided by the pressurized intermediate space makes such sealing of the radiation chamber feasible.

According to one embodiment, the outer walls of the radiation chamber are coated to provide improved sealing of the radiation chamber. As hot spots are effectively prevented by the flow of air in the intermediate space, the requirements on such air-tight coating with respect to heat resistivity can be somewhat relaxed, thereby significantly reducing cost. Further, it becomes feasible to use a flexible coating, which has advantages compared to a rigid sealing such as metal. By "flexible" in this context is intended to mean that the material can expand without significant tension when subjected to elevated temperatures. As a consequence, the sealing properties can be maintained to a larger extent.

It may be advantageous to seal only portions of the chamber walls. For example, in an application where the radiation chamber is formed by several wall partitions that are joined together, the joints may be provided with a sealing coating. Further, areas which are expected to be subjected to higher heat than surrounding areas may be left un-coated, thereby creating an intentional flow of air from the intermediate space into the radiation chamber in these un-coated portions.

The enclosure, on the other hand, is preferably substantially air tight, so that little or no air escapes from the enclosure. Although not necessary in principle, an air tight enclosure makes it easier to ensure the higher pressure, and also makes control of the system easier and more predictable.

In a preferred embodiment, the combustion chamber has an inlet for introducing air into the combustion chamber to enable combustion of the fuel, and an exhaust outlet for removal of exhaust gases from the chamber, and the system further comprises a heat recuperator having a primary side with a primary inlet and a primary outlet, and a secondary side with a secondary inlet and a secondary outlet, wherein the primary outlet is fluidly connected to the inlet of the combustion chamber, and wherein the secondary inlet is connected to the exhaust outlet, and a pump arranged to create a flow of air through the primary side of the recuperator, the combustion chamber, and the secondary side of the recuperator.

In this case, the enclosure outlet is preferably in fluid connection with the inlet of the primary side of the recuperator. At least some of the heat energy escaping through the walls of the radiation chamber is thereby reused in the energy conversion process.

The chamber inlet and the exhaust outlet typically need to be sealed against the outer enclosure and the intermediate space by suitable sealing elements. Such sealing elements are preferably cooled by the air circulating through the intermediate space.

In some embodiments, one single air pump is operable to supply air to the enclosure inlet, through the intermediate space and further to the primary inlet of the recuperator. Part of the flow may be by-passed, i.e. the air flow from the pump may be divided into a first flow, connected to the enclosure inlet, and a second flow, connected directly to the recuperator primary inlet. In this case, the system may further comprise a bypass valve arranged to control a division of the air flow into the first and second flow, and a controller for controlling the bypass valve in order to ensure a higher pressure in the intermediate space than in the combustion chamber.

The flow(s) from the pump may be adaptively controlled based on sensor information relating to air mass flow. The flow through the intermediate space may be adaptively controlled based e.g. on temperature in the intermediate space.

According to some embodiments, the pressure control system receives sensor information relating to a pressure inside the radiation chamber. Such information may be beneficial for adequate pressure control. Further, the system may comprise a fault detection system configured to detect malfunction of the Stirling engine based on the detected pressure inside the radiation chamber.

### Brief description of the drawings

The present invention will be described in more detail with reference to the appended drawings, showing currently preferred embodiments of the invention.
Figure 1 is a schematic perspective view of an energy conversion system according to an embodiment of the present invention.
Figure 2 is a schematic block diagram of some parts of the system in figure 1.
Figure 3a-c show operation of the movable cover in figure 2.
Figure 4a-b illustrate a radiation chamber according to another embodiment.

### Detailed description of preferred embodiments

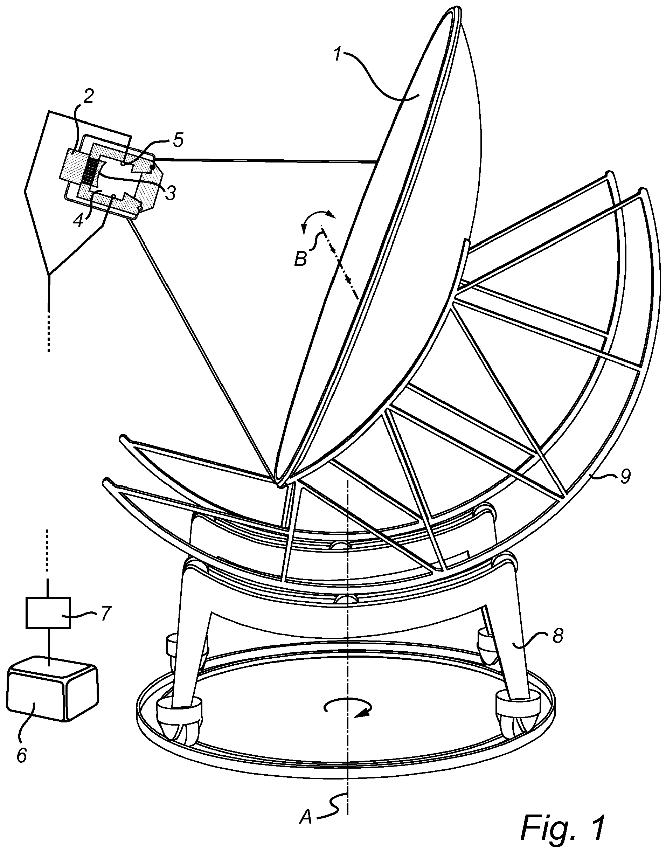

Figure 1 schematically illustrates an energy conversion system according to an embodiment of the present invention. The system generally comprises a sun concentrator, here in the form of a parabolic dish 1, and a Stirling engine 2. The Stirling engine has a radiation-to-heat exchanger 3 surrounded by a radiation chamber 4. The radiation chamber is located with its entrance in the focal point of the dish, and configured to receive concentrated solar radiation. The radiation-to-heat exchanger is further configured to contain the concentrated sun radiation and increase performance. The basic function of the Stirling engine is to convert solar radiation into mechanical energy, which in turn can be converted into electrical energy using an alternator or generator.

According to the present invention, the radiation chamber 4 is further provided with a burner arrangement 5, arranged to use the radiation chamber 4 as a combustion chamber for combustion of a liquid or gas fuel. The fuel can be provided to the burner 5 under pressure from a fuel storage 6.In case of a gas fuel, the fuel storage may be a pressurized gas tank, while in the case of a liquid fuel a fuel pump 7 may be used to provide the pressure. The burner is capable of generating sufficient heat convection and heat radiation inside the radiation chamber to operate the Stirling engine also at times when there is no, or insufficient, available sun radiation.

The combustion is preferably a "low pressure combustion", i.e. the pressure is typically below 5 bar.

The dish is operated by an actuator arrangement 8, 9, configured to adjust the orientation of the dish depending on the position of the sun so as to maximize the inflow of solar radiation into the radiation chamber. The arrangement here comprises a turning platform 8, configured to rotate the dish 1 around a vertical axis A. The arrangement further comprises a cradle 9 in which the dish is turnable around a horizontal axis B. During night time, and at any other time when the solar dish is not collecting solar radiation, the actuator arrangement may be configured to place the dish in an inactive resting position. As the dish may have a diameter of several meters, the resting position is preferably horizontal, so as to reduce forces caused by wind.

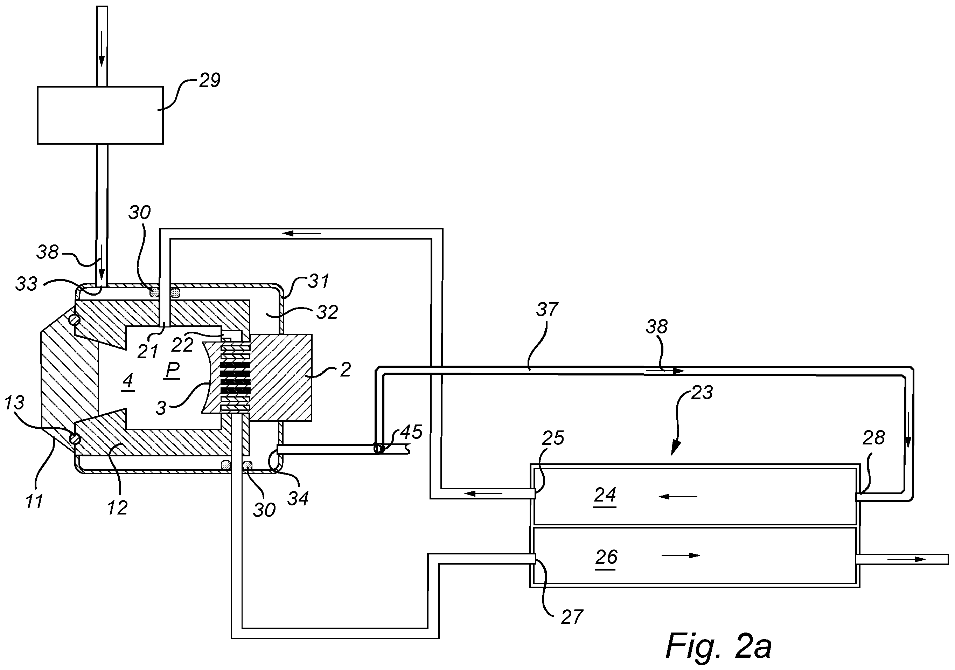

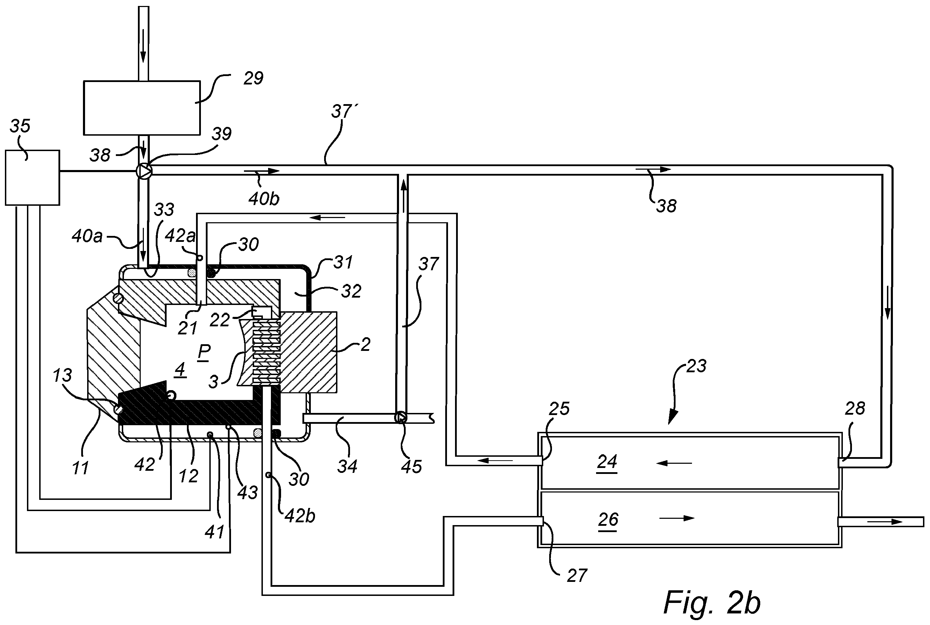

Selected parts of the heat conversion system, including the Stirling engine 2, its radiation-to-heat-exchanger 3 and the radiation chamber 4, are illustrated schematically in figure 2a and 2b.

The details of the Stirling engine and its radiation-to-heat exchanger are known in the art, and will not be further described here.

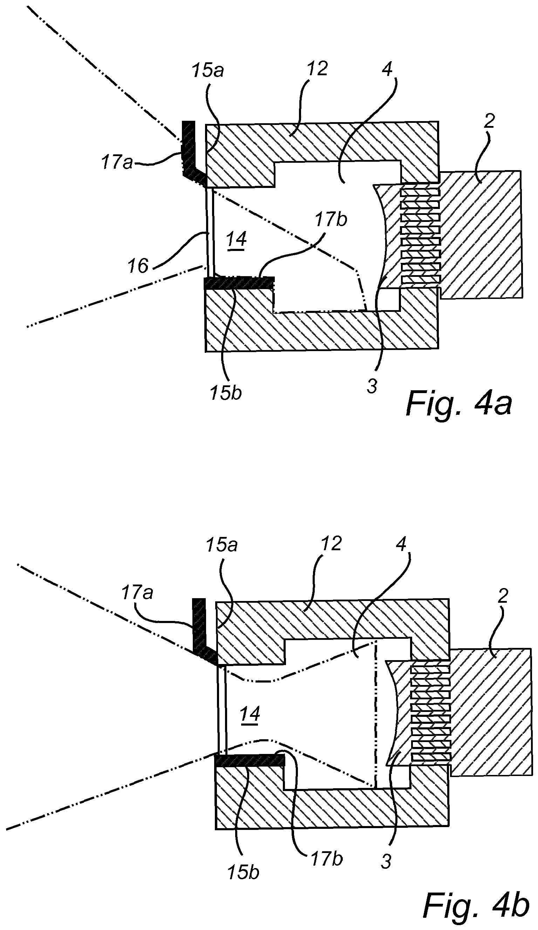

In order to efficiently serve as a combustion chamber, the entrance of the radiation chamber needs to be closed during combustion. In the embodiment illustrated in figure 2a and 2b, the radiation chamber 4 is closed with a movable cover 11. Such a cover can be operated to close the chamber when the system is operated in combustion mode, and then removed to allow sun radiation into the chamber during solar mode. The cover 11 is here sealed against the chamber walls 12 by means of a suitable sealing element 13. As an alternative to a movable cover, the chamber 4 may be sealed by a transmissive window, as shown in figure 4.

It is noted that during alignment, i.e. when the dish 1 is operated in or out of the sun radiation, the entrance 14 of the radiation chamber may briefly be subjected to concentrated solar radiation. For this purpose, in absence of effective cooling of the entrance, selected portions of the entrance surfaces 15 may need to be shielded to withstand such radiation. In the illustrated embodiment, the movable cover 11 can serve to provide such sealing.

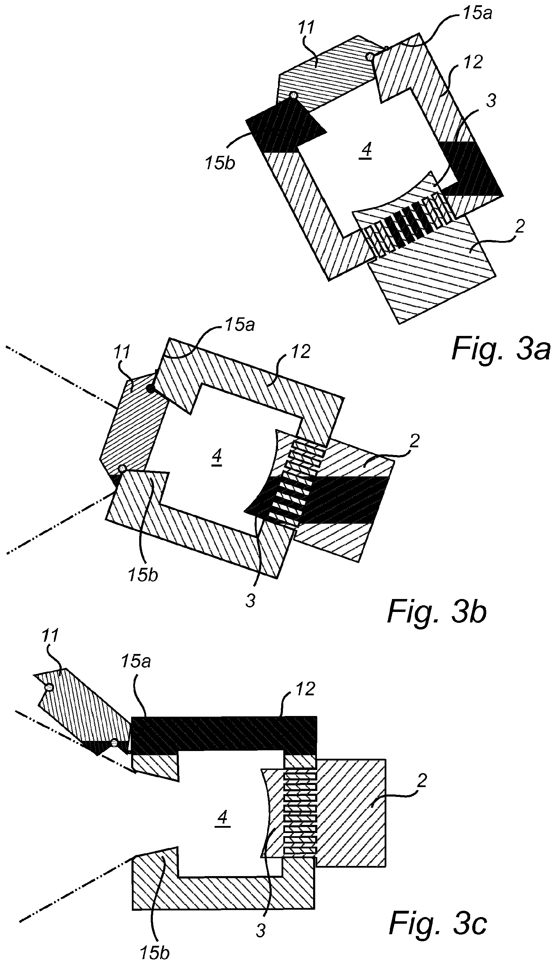

As illustrated in figure 3a-c, the chamber can be closed by the cover 11 when the dish 1 is not facing the sun (figure 3a). The cover is maintained in closed position as the dish is operated by the actuating arrangement 8, 9 to face the sun. At the final stage of such motion (figure 3b), concentrated solar radiation will impact the cover, but will be prevented to impact the entrance surfaces 15 or other parts of the chamber walls 12. When the dish 1 is in position, the cover can be removed (figure 3c), thereby allowing the concentrated solar radiation to enter the entrance 14 (without hitting the entrance surfaces 15).

Alternatively, if sufficiently effective cooling of the entrance is provided, e.g. water cooling, the movable cover can be removed first, before the dish is operated to directed towards the sun.

In another embodiment, illustrated in figure 4a-b, the entrance of the radiation chamber is permanently closed by a transparent window 16, made e.g. of glass. In this case, appropriate shielding 17a, 17b is provided to parts of the entrance surface. The shielding may be different on different sides of the entrance. In the illustrated example, the shielding is configured to allow alignment of the chamber upwards in the figure. As a consequence, the shielding 17a on the upper side of the entrance extends to protect the outside of the chamber wall 15a, as concentrated solar radiation will pass across this surface. On the lower side, 15b, the corresponding outside will not be subject to concentrated radiation. Instead, the shielding 17b on the lower side of the entrance 15 extends to protect the lower inside 15b of the entrance.

It is noted that if sufficient cooling of the entrance surfaces, such as water cooling, can be provided, then the shielding 17 may not be necessary.

Returning to figure 2a and 2b, the chamber 4 is provided with an inlet 21 for introducing air into the radiation chamber 4 to enable combustion of the fuel, and an exhaust outlet 22 for removal of exhaust gases. In order to increase efficiency the system here includes a heat recuperator 23, configured to use the exhaust air to pre-heat the air which is supplied to the inlet. The recuperator has a primary side 24 with a primary outlet 25 fluidly connected to the inlet 21 of the combustion chamber and a secondary side 26 with a secondary inlet 27 fluidly connected to the exhaust outlet 22. The primary inlet 28 is connected to a fan, or pump 29, configured to create a flow of air through the primary side 24, the combustion chamber 4, and the secondary side 26. The flow may be adaptively controlled based on sensor information relating to air mass flow and/or air pressure.

The walls 12 of the radiation chamber need to sustain very high temperatures (in the order of 1500 degrees Celsius). Typically, they are made of a porous ceramic material, but other materials are also possible. If the material in the chamber walls are permeable to air, it may be advantageous, or even necessary, to provide at least parts of the outside of the chamber walls with an air-tight coating, in order to enable efficient combustion in the chamber. Such coating may be unnecessary if the walls themselves are sufficiently air-tight, or even completely air-tight.

The sealing coating is preferable flexible, i.e. it is capable of expanding with temperature without losing its sealing properties. As an example, a polymer material may be used, e.g. a silicone rubber.

In one embodiment, the chamber is composed of several separate wall partitions, joined together along joints which are less air tight than the walls (exhibit less air resistance). In solar mode, this is not a critical issue, but in combustion mode it may be necessary to seal such joints in order to avoid excessive leakage along the joints.

According to the invention, the radiation chamber 4 is further enclosed by an enclosure 31. The enclosure may be made of metal or other suitable material, and creates an intermediate space 32 surrounding the radiation chamber. The enclosure 31 is further substantially sealed, although for practical reasons it will not be completely air-tight. For example, a controlled leakage may be used to cool sealing elements 30 provided to seal the inlet 21 and outlet 22. The enclosure has an inlet 33 arranged to introduce cooling air into the intermediate space, and an outlet 34 arranged to allow escape of air which has been heated by dissipated heat from the combustion chamber. The outlet 34 can be connected to the recuperator inlet 28 via a conduit 37, in order to thereby recycle as much as possible of the heat dissipating through the walls of the chamber 4. An evacuation valve 45 may be arranged along the conduit 37 to allow discharge of air from the enclosure outlet 34.

During combustion, the pump can be configured to adaptively control the flow based e.g. on air mass flow. The entire system is further configured to ensure that the pressure in the intermediate space 32 during combustion is higher than the pressure in the combustion chamber. It is noted that the pressure in the combustion chamber during combustion typically is below 5 bar, and possibly even below 1 bar.

In figure 2a, one single flow 38 of air from the pump is directed to the intermediate space 32 and further to the recuperator 23. This flow is primarily governed by the amount of air required for the combustion process. The system, in particular the design of the enclosure outlet 34, is configured such that when an adequate flow is provided by the pump 29, the pressure in the space 32 is sufficient.

In figure 2b, a bypass valve 39 is provided before the enclosure inlet 33, and a by-pass 37' is connected between the by-pass valve 39 and the conduit 37. The bypass valve 39 divides the flow 38 into a first air flow 40a directed to the enclosure inlet 33, and a second air flow 40b directed to the primary side inlet 28 of the recuperator 23. After passing through the intermediate space 32, the second flow 40b (which now has been heated by heat dissipating from the chamber into the intermediate space) is recombined with the first air flow 40a to form the total flow 38.

In this case, a controller 35 can be provided to control the bypass valve 39, and thereby control the flow 40a through the enclosure 31, and thus the pressure in the intermediate space 32.

The controller 35 can be provided with information from a temperature sensor 43 arranged in the intermediate space 32, possibly on the outer surface of the chamber 4. Such information will enable adaptive control of the flow of air, and thus the cooling capacity, based on any increase of heat dissipation through the chamber walls.

Adaptive control can also be based on sensor information relating to air pressure. For this purpose, a pressure sensor 41 inside the intermediate space may provide the controller 35 with information relating to the pressure inside the intermediate space.

Optionally, a suitable sensor arrangement may also be provided to detect the pressure P inside the combustion chamber. One option is to arrange one single pressure sensor 42 inside the combustion chamber 4, or, in order to avoid extreme temperatures, outside the chamber 4 but in fluid contact with the chamber. Another, possibly more practical, option is to arrange one sensor 42a at the inlet 21 another sensor 42b at the outlet 22, and determine the pressure P based on information from both sensors. Information about the pressure P may be received by the controller 35, and used to adaptively control the valve 39. Such information may further be used by a fault detection system configured to abort combustion if the detected pressure indicates a fault in the combustion chamber.

In operation, the energy conversion system has two modes; a solar mode and a combustion mode. The decision to enter combustion mode may be scheduled based on time of day, or may be adaptive, based on the currently available sun-light.

In solar mode, the actuator arrangement 8, 9 (see figure 1) is operated so that the dish 2 faces the sun, and concentrated sun radiation enters the chamber 4. This concentrated radiation impacts the radiation-to-heat exchanger 3, which in turn provides heat for operation of the Stirling engine 2.

It is possible that the enclosure 31 may reduce heat dissipation from the outside of the chamber 4 such that the temperature of the intermediate space and any sealing coating of the chamber 4 risks reaching a too high temperature. In such a case, the pump may be activated during solar mode, to create a slight air flow through the intermediate space. In case of a design according to figure 2a, the flow 38 is supplied to the intermediate space 32, and the valve 45 is set to allow discharge of the entire flow. In case of a design according to figure 2b, the valve 39 is set so that the entire flow from the pump is directed to the intermediate space 32 (i.e. flow 40a is equal to flow 38). The valve 45 is again set to allow discharge of the entire flow.

In combustion mode, the actuator arrangement 8, 9 is preferably operated so that the dish does not face the sun. Typically, it is operated to an inactive resting position. Further, if the radiation chamber 4 is not permanently closed as indicated in figure 4, the movable cover 11 has been operated to close the radiation chamber 4. Fuel is then provided by the fuel pump 7 to the burner arrangement 5, and is ignited to cause combustion inside the chamber 4, which now acts as a combustion chamber. Radiation and convection heat reaches the radiation-to-heat converter, which again provides heat for operation of the Stirling engine.

During combustion, the pump 29 creates an air flow 38 which is fed to the intermediate space 32 and to the primary side 24 of the recuperator 23, and further into the combustion chamber 4 via the inlet 21. At the same time, exhaust gases leave the combustion chamber 4 through the outlet 22, and is fed to the secondary side 26 of the recuperator, where they serve to per-heat the air passing through the primary side 24.In case of a design according to figure 2a, the entire flow 38 from the pump is directed through the intermediate space 32 before reaching the recuperator 23.

In case of a design according to figure 2b, the valve 39 directs only a portion 40a of the air flow 38 into the intermediate space 32, while a second flow 40b is directed directly to the recuperator 23. Air which has been heated by heat dissipating form the combustion chamber leaves the intermediate space 32 via outlet 34, and is recombined with the flow 40b.

Only serving as a non-restricting example, the air provide by the pump 29 is ambient air with a temperature in the order of 20-30 °C. In the intermediate space, this air may be heated to around 40 - 60 °C, before it is provided to the recuperator (figure 2a) or recombined with the air flow 40a (figure 2b). Depending on the design, the air reaching the recuperator may have a temperature of maybe 30 - 50°C. The exhaust gases, on the other hand, may have a temperature in the order of 800-1000 °C, and may increase the temperature of the incoming air to 700 - 900 °C. The temperature of air leaving the secondary side of the recuperator may be as low as 100-150°C.

The person skilled in the art realizes that the present invention by no means is limited to the preferred embodiments described above. On the contrary, many modifications and variations are possible within the scope of the appended claims. For example, the mechanical design of the radiation chamber may be different than that schematically indicated in the drawings. Further, the air flow control described with reference to figure 2 may be include additional elements and functions, such as additional sensory, control circuitry, valves and actuators.

## Claims

1. A hybrid energy conversion system comprising:
a sun concentrator,
a radiation chamber configured to receive high density sun radiation from the sun concentrator, said radiation chamber having chamber walls made of a heat resistant material, and
a Stirling engine with a radiation-to-heat exchanger extending into the radiation chamber, so that the Stirling engine is operable to convert the high density sun radiation into mechanical energy,
**characterized by**
a burner arranged to use said radiation chamber as a combustion chamber for combustion of a suitable fuel for operation of the Stirling engine,
an enclosure around the radiation chamber, in part separated from the chamber walls by an intermediate space,
an enclosure inlet arranged to introduce cooling air into said intermediate space, and
an enclosure outlet arranged to allow escape of pre-heated air from said intermediate space,
wherein a pressure in said intermediate space is higher than a pressure in the radiation chamber.

2. The hybrid energy conversion system according to claim 1, wherein the enclosure is substantially air-tight.

3. The hybrid energy conversion system according to claim 1 or 2, wherein at least portions of the outer walls of the radiation chamber are coated to provide improved sealing of the radiation chamber.

4. The hybrid energy conversion system according to any one of the preceding claims, wherein the radiation chamber is formed by several wall elements joined together.

5. The hybrid energy conversion system according to claim 4, wherein joints between said wall elements are sealed in order to reduce flow of air through said joints.

6. The hybrid energy conversion system according to any one of the preceding claims, wherein said combustion chamber has an inlet for introducing air into the combustion chamber to enable combustion of the fuel, and an exhaust outlet for removal of exhaust gases from the chamber,
said system further comprising:
a heat recuperator having a primary side with a primary inlet and a primary outlet, and a secondary side with a secondary inlet and a secondary outlet, wherein said primary outlet is fluidly connected to the inlet of the combustion chamber, and wherein said secondary inlet is connected to said exhaust outlet, and
a pump arranged to create a flow of air through the primary side of the recuperator, the combustion chamber, and the secondary side of the recuperator.

7. The hybrid energy conversion system according to claim 6, wherein said enclosure outlet is in fluid connection with the inlet of the primary side.

8. The hybrid energy conversion system according to claim 6 or 7, further comprising sealing elements for sealing said inlet and said exhaust outlet against said outer enclosure and intermediate space.

9. The hybrid energy conversion system according to one of claims 6 - 8, wherein only one air pump is operable to supply air to said enclosure inlet and to said primary inlet of the recuperator.

10. The hybrid energy conversion system according to claim 10, wherein an air flow from said pump is divided into a first flow, connected to the enclosure inlet, and a second flow, connected directly to the recuperator primary inlet.

11. The hybrid energy conversion system according to claim 10, further comprising a bypass valve arranged to control a division of the air flow into said first and second flow, and a controller for controlling the bypass valve in order to ensure a higher pressure in the intermediate space than in the combustion chamber.

12. The hybrid energy conversion system according to any one of the preceding claims, further comprising a sun capturing dish, wherein an entrance of said radiation chamber is arranged in a focal point of said dish.

13. The hybrid energy conversion system according to any one of the preceding claims, wherein the pressure control system receives sensor information relating to a pressure inside the radiation chamber.

14. The hybrid energy conversion system according to claim 13, further comprising a fault detection system configured to detect malfunction of the Stirling engine based on the pressure in the radiation chamber.

15. The hybrid energy conversion system according to any one of the preceding claims, wherein said heat resistant material is an air-permeable material, such as a porous ceramic material.
